# EUROPEAN PATENT APPLICATION

(11) **EP 4 560 462 A1**
(43) Date of publication of application: **28.05.2025**
(21) Application number: 24193015.5
(22) Date of filing: 06.08.2024
(51) Int. Cl.: G06F 8/65, G06F 12/02, G07C 5/00

(54) **MICROCONTROLLER CHIP**

(30) Priority: 22.11.2023 CN 202311568398
(71) Applicant: GigaDevice Semiconductor Inc., Haidian, Beijing (CN)
(72) Inventor: GAO, Yang, Beijing (CN); ZHANG, Yingwu, Beijing (CN)
(74) Representative: dompatent von Kreisler Selting Werner - Partnerschaft von Patent- und Rechtsanwälten mbB

(57) **Abstract**

The present invention provides an MCU chip (200) composed of an MCU die (201) and two or more flash memory dies stacked and packaged with the MCU die (201). In order to update firmware by means of an OTA upgrade, an OTA upgrade version of the firmware may be programmed into a second flash memory die, and an older version of the firmware may be stored in a first flash memory die. In this way, programming the OTA upgrade version of the firmware into the second flash memory die does not affect any operation in the first flash memory die, allowing RWW operations in the MCU chip (200). As a result, the influence of erase and program operations in the flash memory dies on operating efficiency of the firmware is greatly reduced, resulting in increases in operating performance, operating efficiency, support to OTA upgrades and upgrading efficiency of the MCU chip (200).

## Description

### TECHNICAL FIELD

The present invention relates to the field of integrated circuits and, in particular, to an MCU chip.

### BACKGROUND

Microcontroller units (MCUs) are miniature computer chips used in many electronic devices as control cores. They consume less power and are flexibly programmable.

Conventional MCU chips often employ an architecture, in which a flash memory is incorporated to store code and data produced during use of the MCU. Specifically, an MCU die is stacked and packaged with a flash memory die (usually, an NOR flash memory die) using a system-in-package (SiP) technique. The MCU die executes firmware stored in the flash memory die in an execute-in-place (XiP) mode and carries out data interaction through an SPI or other bus interface.

However, in this MCU chip architecture, usually, the flash memory die can perform only one of read, write and erase operations at the same time. For example, when the MCU die is performing an erase or program operation on the flash memory die, it cannot carry out a read operation on the flash memory die at the same time. This, on the one hand, dramatically reduces the MCU's operating efficiency and, on the other hand, provides poor support to over-the-air (OTA) upgrades of the MCU chip, which affects its upgrading efficiency and cost.

### SUMMARY

It is an objective of the present invention to provide an MCU chip with higher operating efficiency and enhanced support to OTA upgrades.

To this end, the present invention provides an MCU chip, which includes, packaged in a single package (i.e., the MCU chip is a SiP MCU chip),
an MCU die with at least two bus interfaces, and
at least two flash memory dies which are connected to the respective bus interfaces and configured for storage of firmware,
wherein the MCU die is configured to utilize address mapping control to convert received bus operation requests into a temporal sequence of access to the flash memory dies via the respective bus interfaces, and to program an OTA upgrade version of the firmware into a second flash memory die of the flash memory dies, wherein during the course of the programming, if the OTA upgrade version of the firmware in the second flash memory die is detected to be invalid after a power-on reset or system reset, then an older version of the firmware stored in a first flash memory die of the flash memory dies is executed, or if the OTA upgrade version of the firmware in the second flash memory die is detected to be valid after the power-on reset or system reset, then the OTA upgrade version of the firmware is executed.

Compared with conventional SiP MCU chips, the MCU chip of the present invention is composed of an MCU die and two or more flash memory dies stacked and packaged with the MCU die. In order to update firmware by means of an OTA upgrade, an OTA upgrade process may be initiated to program an OTA upgrade version of the firmware into a second flash memory die of the flash memory dies, and an older version of the firmware may be stored in a first flash memory die of the flash memory dies. In this way, programming the OTA upgrade version of the firmware does not affect operations in the first and other flash memory dies, allowing RWW operations in the MCU chip. As a result, the influence of erase and program operations in the flash memory dies on operating efficiency of the firmware is greatly reduced, resulting in increases in operating performance, operating efficiency, support to OTA upgrades and upgrading efficiency of the MCU chip. Moreover, if the OTA upgrade version of the firmware is detected to be invalid after the system is powered on again or reset, it will execute (i.e., roll back to) the older version of the firmware in the first flash memory die, enhancing security of the system.

Optionally, in the MCU chip of the present invention, the flash memory dies may include a plurality of first flash memory dies storing respective different older versions of the firmware, wherein the MCU die is also configured to execute, according to a roll-back instruction generated in response to failure of an OTA upgrade, the older version of the firmware stored in a designated one of the first flash memory dies. With this arrangement, switching between multiple versions of the firmware can be achieved, such as an initial version from the factory, previous stable version(s) and designated version(s). This enables personalized OTA upgrade strategies, simultaneous read, write and erase operations in more flash memory dies other functions, enhancing operating efficiency of the system.

Optionally, in the MCU chip of the present invention, the second and first flash memory dies may be configured for storage of the respective versions of the firmware, and the other one(s) of the flash memory dies may be configured for storage of data. With this arrangement, programs to be run and data to be accessed can be separately stored, additionally enhancing the system's operating efficiency.

Optionally, the MCU die may have an FMC module including:
an address mapping circuit for mapping different logical bus addresses in the MCU die to respective different physical addresses in the flash memory dies, thereby forming logical address mappings;
an interface control circuit for converting the received bus operation requests into the temporal sequence for the bus interfaces;
a swap control circuit for controlling, when the OTA upgrade version of the firmware in the second flash memory die is valid, the address mapping circuit to swap at least logical address mappings for firmware storage spaces of the second and first flash memory dies.

With this arrangement, hardware modules and logic circuits can be used to achieve, at low cost, address mapping and swapping between the MCU die and the first and second flash memory dies, access to the firmware and relevant data, etc.

Optionally, the swap control circuit may include a swap flag bit, wherein the FMC module is also configured to, after the power-on reset or system reset after the OTA upgrade version of the firmware is programmed and stored in the second flash memory die, perform a self-check on the OTA upgrade version of the firmware stored in the second flash memory die and if the self-check passes, it is indicated that the OTA upgrade version of the firmware valid by setting the swap flag bit valid, thereby causing the swap control circuit to control the address mapping circuit to swap the logical address mappings for the second and first flash memory dies, or if the self-check fails, it is indicated that the stored OTA upgrade version of the firmware invalid by setting the swap flag bit invalid, thereby causing the address mapping circuit to maintain the logical address mappings. With this arrangement, the swap flag bit can be used to quickly confirm whether to swap the logical address mappings and execute OTA upgrade version of the firmware after the system is powered on again or reset. Moreover, when the OTA upgrade version of the firmware is invalid, the system can restore the default logical address mappings in a timely manner to allow the older version of the firmware to be executed. This can enhance security of the system.

Optionally, in the MCU chip of the present invention, the second and first flash memory dies may include respective code regions configured for storage of the respective versions of the firmware, wherein if the OTA upgrade version of the firmware in the second flash memory die is detected to be valid after the power-on reset or system reset, the swap control circuit swaps only logical address mappings for the code regions of the first and second flash memory dies. With this arrangement, OTA upgrading and firmware execution can be simply achieved in logical address ranges that correspond to the code regions of the flash memory dies. As these regions can be read and accessed without delays, the system can run the firmware at its full rate, resulting in an additional increase in the system's operating efficiency.

Optionally, in the MCU chip of the present invention, the second and first flash memory dies may include respective code regions configured for storage of the respective versions of the firmware, wherein if the OTA upgrade version of the firmware in the second flash memory die is detected to be valid after the power-on reset or system reset, the swap control circuit swaps logical address mappings for the entire first and second flash memory dies. With this arrangement, as a result of the swap control circuit swapping the logical address mappings for the entire first and second flash memory dies, the OTA upgrade version of the firmware in the second flash memory die can be read and executed.

Optionally, the FMC module may further include a first buffer region with capacity that is equal to capacity of each of the code regions, wherein if the OTA upgrade version of the firmware in the second flash memory die is detected to be invalid after the power-on reset or system reset, the content in the code region of the first flash memory die is copied into the first buffer region, or if the OTA upgrade version of the firmware in the second flash memory die is detected to be valid after the power-on reset or system reset, the content in the code region of the second flash memory die is copied into the first buffer region. With this arrangement, during execution of the firmware by the MCU chip, the firmware can be copied from the code region of the second or first flash memory die into the first buffer region, allowing the MCU die to run the firmware in its internal first buffer region. In this way, read, write and erase operations can be performed in the first and other flash memory dies at the same time as the programming of the OTA upgrade version of the firmware, increasing the system's operating efficiency.

Optionally, the FMC module may further include a first buffer region with capacity that is greater than capacity of each of the code regions, wherein if the OTA upgrade version of the firmware in the second flash memory die is detected to be invalid after the power-on reset or system reset, the content in the code region of the first flash memory die is copied, together with the content in a designated logical address range in the second or first flash memory die, which does not overlap with a logical address range corresponding to the code region, into the first buffer region, or if the OTA upgrade version of the firmware in the second flash memory die is detected to be valid after the power-on reset or system reset, the content in the code region of the second flash memory die is copied, together with the content in the designated logical address range in the second or first flash memory die, into the first buffer region. With this arrangement, during execution of the firmware by the MCU chip, the firmware in the code region of the second or first flash memory die can be copied, together with the designated (desired) content stored out of the code region of the second or first flash memory die, into the first buffer region, allowing the MCU die to run the firmware in its internal first buffer region and directly read the designated data. This can enhance the system's operating efficiency as much as applicable.

Optionally, the MCU chip may further include a second cache region, wherein in addition to the content(s) copied into the first buffer region, the other contents stored in the second and first flash memory dies are copied, as required, into the second cache region and then accessed, or are accessed via the bus interfaces according to a temporal sequence generated by the interface control circuit, and/or wherein the second cache region consists of an SRAM and, in the event of a logical address miss occurring in the second cache region, the FMC module copies the correct content from the second or first flash memory die into the second cache region. With this arrangement, contents which do not require a high read rate can be stored in storage regions corresponding to logical address ranges out of the code region of the second or first flash memory die where the firmware is to be executed (access to these storage regions may experience some delays), and the FMC module of the MCU die can read these contents by copying them, as required, into the second cache region and then accessing them, or by accessing them via the bus interfaces according to a temporal sequence converted from bus operation requests. This can expand the scope of application of the inventive MCU chip.

Optionally, the first buffer region may consist of a single SRAM or a combination of plurality of SRAMs. This makes the first buffer region easier to implement.

Optionally, after the power-on reset or system reset after the OTA upgrade version of the firmware is programmed and stored in the second flash memory die, the content in the code region of the second flash memory die may be copied into the first buffer region, and the FMC module may then perform a self-check on the content copied into the first buffer region, wherein if the self-check passes, it is indicated that the OTA upgrade version of the firmware in the second flash memory die is valid, and the FMC module directly accesses the first buffer region to run the OTA upgrade version of the firmware, or if the self-check fails, it is indicated that the OTA upgrade version of the firmware in the second flash memory die is invalid, and the content in the code region of the first flash memory die is again copied into the first buffer region, followed by another self-check performed on the content copied into the first buffer region, wherein if the other self-check passes, it is indicated that the older version of the firmware in the first flash memory die is valid, and the FMC module directly accesses the first buffer region to run the older version of the firmware. With this arrangement, after the power-on reset or system reset after the OTA upgrade version of the firmware is programmed and stored in the second flash memory die, the OTA upgrade version of the firmware is first checked, and only when the check on the OTA upgrade version of the firmware fails will the older version of the firmware be checked. Thus, the valid version of the firmware in the first buffer region can be run as quickly as possible.

Optionally, the FMC module may further include a second cache region, wherein if the OTA upgrade version of the firmware in the second flash memory die is detected to be invalid after the power-on reset or system reset, the content in the code region of the first flash memory die is copied into the second cache region, or if the OTA upgrade version of the firmware in the second flash memory die is detected to be valid after the power-on reset or system reset, the content in the code region of the second flash memory die is copied into the second cache region. This allows the first buffer region (consisting of one or more SRAMs) to be omitted from the MCU die, allowing the MCU chip to have a reduced area and cost.

Optionally, in addition to the content copied into the second cache region, the other contents stored in the second and first flash memory dies may be copied, as required, into the second cache region and then accessed, or may be accessed via the bus interfaces according to a temporal sequence generated by the interface control circuit. With this arrangement, contents which do not require a high read rate can be stored in storage regions corresponding to logical address ranges out of the code regions of the flash memory dies where the firmware is to be executed (access to these storage regions may experience some delays), and the FMC module of the MCU die can read these contents by copying them into the second cache region and then accessing them, or by accessing them via the bus interfaces according to a temporal sequence converted from bus operation requests. This can expand the scope of application of the inventive MCU chip.

Optionally, the bus interfaces may be SPI interfaces. This makes the present invention compatible with the conventional SiP MCU chip process.

Optionally, the MCU die may further include a code error flag bit, which is set to disable execution of the firmware if the MCU die determines that all the versions of the firmware stored in the flash memory dies are invalid. This can prevent the MCU chip from falling into an infinite loop.

### BRIEF DESCRIPTION OF THE DRAWINGS

Those of ordinary skill in the art would appreciate that the accompanying drawings are provided to facilitate a better understanding of the present invention and do not limit the scope thereof in any sense, in which:
Fig. 1 schematically illustrates the architecture of a conventional SiP MCU chip;
Fig. 2 schematically illustrates the architecture of another conventional SiP MCU chip;
Fig. 3 schematically illustrates the architecture of a SiP MCU chip according to a first embodiment of the present invention;
Fig. 4 schematically illustrates non-swapped and swapped logical address mappings of the MCU chip according to the first embodiment of the present invention;
Fig. 5 schematically illustrates how the logical address mappings change during an OTA upgrade process on the MCU chip according to the first embodiment of the present invention;
Figs. 6A and 6B schematically illustrate the architecture and non-swapped and swapped logical address mappings of a SiP MCU chip according to a second embodiment of the present invention;
Fig. 7 is a schematic flowchart of an OTA upgrade process performed on the MCU chip according to the second embodiment of the present invention;
Figs. 8A and 8B schematically illustrate the architecture and non-swapped and swapped logical address mappings of a SiP MCU chip according to a third embodiment of the present invention;
Figs. 9A and 9B schematically illustrate the architecture and non-swapped and swapped logical address mappings of the SiP MCU chip according to a fourth embodiment of the present invention;
Figs. 10A and 10B schematically illustrate two examples of swapped logical address mappings of a SiP MCU chip according to a fifth embodiment of the present invention; and
Fig. 11 schematically illustrates two examples of swapped logical address mappings of a SiP MCU chip according to a sixth embodiment of the present invention.

### DETAILED DESCRIPTION

The following description sets forth numerous specific details in order to provide a more thorough understanding of the present invention. However, it will be apparent to those skilled in the art that the present invention can be practiced without one or more of these specific details. In other instances, well-known technical features have not been described in order to avoid unnecessary obscuring of the invention. It is to be understood that the invention may be embodied in many different forms and should not be construed as being limited to the embodiments set forth below. Rather, these embodiments are provided so that this disclosure is thorough and conveys the scope of the invention to those skilled in the art. In the drawings, like reference numerals refer to like elements throughout. It will be understood that when an element is referred to as being "connected to" or "coupled to" another element, it can be directly connected or coupled to the other element, or intervening elements may also be present. In contrast, when an element is referred to as being "directly connected to" another element, there are no intervening elements. As used herein, the singular forms "a", "an" and "the" are intended to include the plural forms as well, unless the context clearly indicates otherwise. It will be further understood that the term "comprising" specifies the presence of stated features, steps, operations, elements, and/or components, but do not preclude the presence or addition of one or more other features, steps, operations, elements, components, and/or groups thereof. As used herein, the term "and/or" includes any and all combinations of the associated listed items.

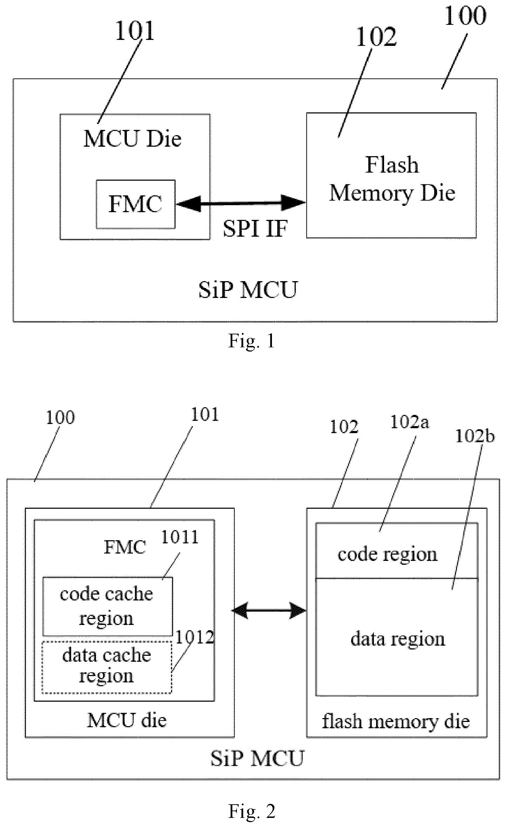

Conventional SiP MCU chips 100 often adopt an architecture as shown in Fig. 1, in which an MCU die 101 is stacked and packaged with a flash memory die (usually, an NOR flash memory die) 102. The flash memory die 102 stores therein firmware and the like necessary for operation of the SiP MCU chip 100. The MCU die 101 and the flash memory die 102 are usually connected to each other by an SPI or other bus interface that allows data interaction therebetween. Through this bus interface, the MCU die 101 can directly run a program stored in the flash memory die 102 in an execute-in-place (XiP) mode. Typically, the MCU die 101 includes a flash memory controller (FMC) module 101a, the FMC module 101a logically partitions the memory space of the flash memory die 102 into a number of regions for use by software programs. The FMC module 101a is responsible for mapping bus addresses in the MCU die 101 to storage addresses in the flash memory die 102, partitioning, access control, conversion of read and write instructions and other functions.

In this SiP MCU chip 100, usually, the flash memory die 102 can perform only one of read, write and erase operations at the same time. For example, when performing an erase or program operation on some address spaces in the flash memory die 102, the MCU die 101 is not able to perform a simultaneous read operation on the flash memory die 102. At this time, a bus in the MCU die 101 is hung up for a while until the flash memory die 102 becomes responsive to an associated read instruction and returns valid data. This dramatically reduces the MCU's operating efficiency. Moreover, since the flash memory die 102 itself disallows simultaneous read and erase/program operations, this architecture provides poor support to over-the-air (OTA) upgrades, which affects the MCU's upgrading efficiency and cost.

At present, many applications such as consumer and automotive electronics often require firmware over-the-air (OTA) upgrades (or updates) of MCU chips in the products after online sales and delivery to the users. In particular, in the automotive field, a manufacturer can distribute a firmware update over a wireless network to chips in automotive electronic devices, which can solve various reported problems and avoid huge economic damage from recalls or the like. Therefore, enhanced support to OTA upgrades is necessary for SiP MCU chips.

For an OTA upgrade of an MCU chip, it is important to prevent upgrade failure due to a possible interrupt or error that may occur during the upgrade process, and to ensure that transfer of the upgrade firmware (i.e., the new version of firmware, or new program code) into the flash memory die 102 does not affect the old version of firmware that has been running on the flash memory die 102. Moreover, if the upgrade fails, it must be rolled back to the old version to allow the MCU die 101 to still run it to avoid use of the product from being affected. However, in the existing SiP MCU chip architecture shown in Fig. 1, as the MCU die 101 has only one bus interface (not labelled) connected to the flash memory die 102, transfer of upgrade firmware to the flash memory die 102 will inevitably take up the bus interface. Consequently, during this process, it is impossible to read the old firmware running on the flash memory die 102, and the flash memory die 102 itself does not allow any read and erase/program operations. Therefore, this architecture inherently exhibits poor support to OTA upgrades of the MCU chip.

One available solution to this is to add a code cache region 1011 with sufficient capacity to the FMC module 101a of the MCU die 101, as shown in Fig. 2. This cache region 1011 corresponds to a storage region in the flash memory die 102 (defined as a code region 102a). The MCU die 101 can access the remaining space of the flash memory die 102 (defined as a data area 102b) directly in an XIP mode, or through a built-in data cache region 1012 in the MCU die 101. After a power-on reset (PoR), the existing firmware is copied from the code region 102a in the flash memory die 102 to the code cache region 1011. In this way, the MCU die 101 can run the firmware in the code cache region 1011. While the upgrade firmware is programmed into the code region 102a of the flash memory die 102, the MCU die 101 can still read instructions in the code cache region 1011 and run the old firmware. However, such a code cache region 1011 in the MCU die 101 typically consists of a static random-access memory (SRAM), which is associated with higher cost per unit area than a flash memory. Therefore, this solution will greatly expand the overall area of the MCU chip due to a considerable area of the MCU die 101 and will thus increase the cost of the product incorporating the MCU chip. Additionally, in the architecture of Fig. 2, the MCU die 101 also has only one bus interface (not labelled) to the flash memory die 102, so operating the data region 102b of the flash memory die 102 is still disallowed at the same time as the new firmware is being programmed. For example, when the MCU die 101 is reading the data region 102b, it cannot perform a program operation on the code region 102a of the flash memory die 102.

In order to overcome the above problem, the present invention proposes a novel SiP MCU chip architecture composed of a microcontroller unit (MCU) die and two or more flash memory dies stacked and packaged with the MCU die. Each flash memory die is connected to the MCU die by a respective bus interface (e.g., an SPI or other interface). Of these flash memory dies, a second flash memory die is configured for storage of an OTA upgrade version of firmware, and a first flash memory die is configured for storage of an older version of the firmware. Alternatively, more first flash memory dies are configured for storage of various older versions of the firmware. In this way, the versions of the firmware stored in the flash memory dies are mutual backups of each other or one another. In order to update the firmware through an OTA upgrade, an OTA upgrade process may be initiated to program the OTA upgrade version of the firmware into the second flash memory die. The programming process does not affect any operation on the first or any other flash memory die at all, and simultaneous operations on the different flash memory dies are allowed. That is, read-while-write (RWW) operations are allowed in the MCU chip. This can considerably reduce the influence of erase and program operations in the flash memory dies on operating efficiency of the firmware, enhancing operating performance of the chip and the system's operating efficiency and support to OTA upgrades. Further, when the OTA upgrade fails, the system can roll back to an older version of the firmware, improving system security.

The present invention will be described in greater detail below with reference to the accompanying drawings, which illustrate specific embodiments thereof. From the following description, advantages and features of the present invention will become more apparent. Note that the figures are provided in a very simplified form not necessarily drawn to exact scale for the only purpose of facilitating easy and clear description of the embodiments disclosed herein.

### EMBODIMENT 1

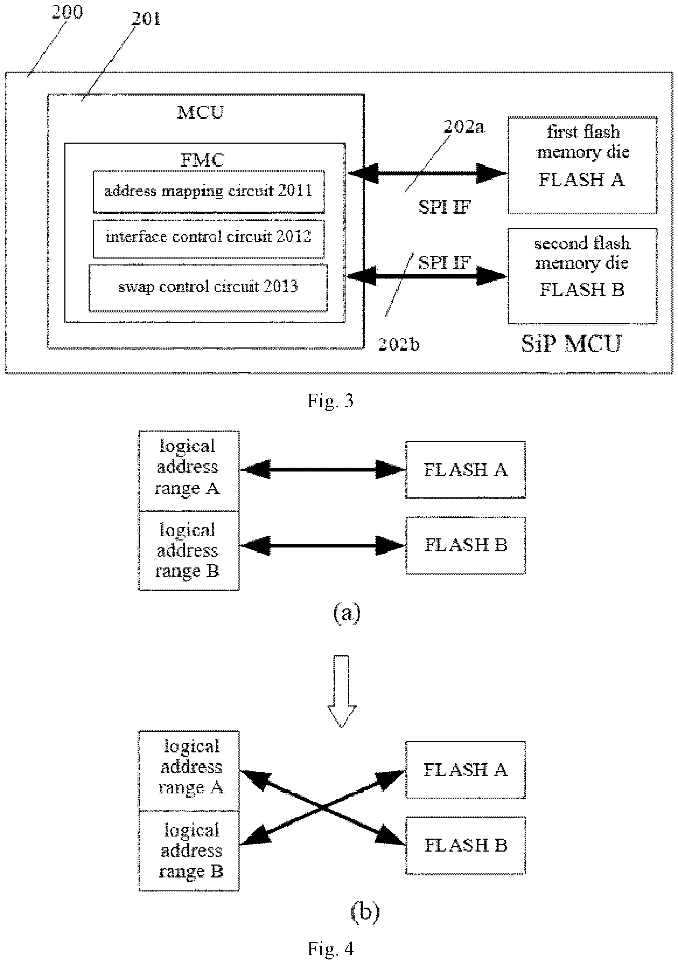

Referring to Fig. 3, in a first embodiment of the present invention, there is provided a microcontroller unit (MCU) chip 200 including an MCU die 201, a first flash memory die FLASH A and a second flash memory die FLASH B, which are packaged in a single package (i.e., the MCU chip 200 is a system-in-package (SiP) MCU chip). In other words, the MCU chip 200 is composed of the MCU die 201 and the two flash memory dies FLASH A, FLASH B that are stacked and packaged with the MCU die 201.

The MCU die 201 has two bus interfaces 202a, 202b. The first flash memory die FLASH A is connected to the MCU die 201 through the bus interface 202a, and the second flash memory die FLASH B is connected to the MCU die 201 through the bus interface 202b. The first flash memory die FLASH A is configured for storage of an older version of firmware (i.e., older code or instructions), and the second flash memory die FLASH B is configured for storage of an OTA upgrade version of the firmware (i.e., code or instructions for enabling an OTA upgrade). Once these versions of the firmware are respectively stored in the first and second flash memory dies FLASH A, FLASH B, they are mutual backups of each other.

In this embodiment, the MCU die 201 is configured to utilize address mapping control to convert received bus operation requests into a temporal sequence of access to the first and second flash memory dies FLASH A, FLASH B via the bus interfaces 202a, 202b, respectively. In order to update the firmware in the MCU chip 200 through an OTA upgrade, an OTA upgrade process may be initiated to program the OTA upgrade version of the firmware into the second flash memory die FLASH B through the bus interface 202b. During this programming process, any operation performed by the MCU die 201 on the first flash memory die FLASH A through the bus interface 202a will not be affected at all. That is, at the same time as a program operation is performed on the OTA upgrade version of the firmware in the MCU chip 200, read, write, erase and other operations on other data are allowed, enhancing the system's operating efficiency and the MCU chip 200's support of the MCU chip 200 to OTA upgrades.

For example, the bus interfaces 202a, 202b may be SPI bus interfaces (labeled as "SPI IF" in Fig. 3).

In this embodiment, referring to Fig. 3, the MCU die 201 includes a flash memory control (FMC) module ("FMC"). The first flash memory die FLASH A is connected to the FMC module by the bus interface 202a, and the second flash memory die FLASH B is connected to the FMC module by the bus interface 202b. Preferably, the FMC module may use hardware modules and logic circuits to achieve, at low cost, address mapping and swapping between the MCU die 201 and the first and second flash memory dies FLASH A, FLASH B, access to the firmware and relevant data, etc.

For example, the FMC module includes an address mapping ("addr mapping") circuit 2011, an interface control ("if ctrl") circuit 2012, a swap control ("swap ctrl") circuit 2013 and other hardware logic circuits. The address mapping circuit 2011 is configured to map different logical bus addresses of the MCU die 201 to physical addresses of the first and second flash memory dies FLASH A, FLASH B, forming logical address mappings. For example, referring to Detail (a) of Fig. 4, the address mapping circuit 2011 may, by default, map a logical bus address range A in the MCU die 201 to physical addresses of the first flash memory die FLASH A and a logical bus address range B that immediately succeeds the logical bus address range A to physical addresses of the second flash memory die FLASH B, thereby forming logical address mappings.

The interface control circuit 2012 is configured to convert received bus operation requests to a temporal sequence of access to the first and second flash memory dies FLASH A, FLASH B of the MCU die 201 through the bus interfaces.

The swap control circuit 2013 is configured to, after the OTA upgrade version of the firmware has been programmed into the second flash memory die FLASH B, when detecting, after a new power-on reset (PoR) or system reset, that the OTA upgrade version of the firmware stored in the second flash memory die FLASH B is valid, control the address mapping circuit 2011 to swap the logical address mappings for the first and second flash memory dies FLASH A, FLASH B. For example, referring to Detail (a) of Fig. 4, the address mapping circuit 2011 may, by default, map a logical bus address range A in the MCU die 201 to physical addresses of the first flash memory die FLASH A and a logical bus address range B that immediately succeeds the logical bus address range A to physical addresses of the second flash memory die FLASH B, thereby forming logical address mappings. In this case, as a result of the swap, the address mapping circuit 2011 may map the logical bus address range A in the MCU die 201 to the physical addresses of the second flash memory die FLASH B and the logical bus address range B that immediately succeeds the logical bus address range A to the physical addresses of the first flash memory die FLASH A, thereby forming swapped logical address mappings. In this way, no matter whether it is before or after a new PoR or system reset, the MCU die 201 will always read instructions starting from the logical bus address range A (from "0" or another low logical address) to execute a corresponding version of the firmware. In the default state shown in Detail (a) of Fig. 4, the MCU die 201 first reads instructions from the logical bus address range A to execute the older version of the firmware stored in the first flash memory die FLASH A. In the swapped state (or mode) shown in Detail (b) of Fig. 4, the MCU die 201 also first reads instructions from the logical bus address range A to execute the OTA upgrade version of the firmware stored in the second flash memory die FLASH B.

It would be appreciated that, since different functions are required in various applications, the logical address ranges swapped by the swap control circuit 2013 may entirely or partially cover the storage spaces of the first and second flash memory dies FLASH A, FLASH B.

In this embodiment, when an error or interrupt occurs during the programming of the OTA upgrade version of the firmware into the second flash memory die FLASH B, or when the OTA upgrade version of the firmware is damaged during the programming process, or when the OTA upgrade version of the firmware that is being programmed into the second flash memory die FLASH B is found to be problematic itself, once the system is powered on again or reset later after the OTA upgrade version of the firmware is programmed into the second flash memory die FLASH B, the MCU chip 200 will detect that the OTA upgrade version of the firmware stored in the second flash memory die FLASH B is invalid, indicating failure of the OTA upgrade. In this situation, the swap control circuit 2013 may maintain the logical bus address mappings in the default state. That is, the address mapping circuit 2011 is controlled to still map the logical bus address range A in the MCU die 201 to the physical addresses of the first flash memory die FLASH A and the logical bus address range B that immediately succeeds the logical bus address range A to the physical addresses of the second flash memory die FLASH B. As a result, after the system is powered on again or reset, the MCU die 201 reads instructions from the logical bus address range A to execute the older version of the firmware stored in the first flash memory die FLASH A, rather than the OTA upgrade version of the firmware stored in the second flash memory die FLASH B. This can avoid security issues during operation of the product.

In some other cases, the OTA upgrade version of the firmware may be found to be problematic after it has been distributed by the OTA upgrade service provider itself or according to user feedback, an instruction may be provided in a timely manner for rolling back to the older version of the firmware. After the MCU chip 200 receives the instruction, the swap control circuit 2013 may restore the logical bus address mappings in the default state. Accordingly, the address mapping circuit 2011 is controlled to still map the logical bus address range A in the MCU die 201 to the physical addresses of the first flash memory die FLASH A and the logical bus address range B that immediately succeeds the logical bus address range A to the physical addresses of the second flash memory die FLASH B. As a result, after the system is powered on again or reset, the MCU die 201 reads instructions from the logical bus address range A to execute the older version of the firmware stored in the first flash memory die FLASH A, rather than the OTA upgrade version of the firmware stored in the second flash memory die FLASH B, avoiding security issues during operation of the product.

Optionally, the swap control circuit 2013 may include a non-volatile swap flag bit. In the default state (or mode), the logical bus address range A is mapped to the physical addresses of the first flash memory die FLASH A, and the logical bus address range B to the physical addresses of the second flash memory die FLASH B. After the system is powered on again or reset, if the OTA upgrade version of the firmware stored in the second flash memory die FLASH B passes a check, the swap flag bit is set valid (e.g., to "0"), indicating that the OTA upgrade version of the firmware stored in the second flash memory die FLASH B is valid. Accordingly, the system is switched to the swapped state (or mode), in which the logical bus address range A is mapped to the physical addresses of the second flash memory die FLASH B and the logical bus address range B to the physical addresses of the first flash memory die FLASH A. In this way, the logical address mappings are swapped. If the OTA upgrade version of the firmware stored in the second flash memory die FLASH B fails the check, then nothing is done to the swap flag bit (e.g., it is cleared), or it is set invalid (e.g., to "1"), indicating that the OTA upgrade version of the firmware stored in the second flash memory die FLASH B is valid. Accordingly, the logical bus address range A is stilled mapped to the physical addresses of the first flash memory die FLASH A and the logical bus address range B to the physical addresses of the second flash memory die FLASH B. As such, the swap flag bit can be used to quickly confirm whether to swap the logical address mappings and execute OTA upgrade version of the firmware after the system is powered on again or reset. Moreover, when the OTA upgrade version of the firmware is invalid, the system can restore the default logical address mappings in a timely manner to allow the older version of the firmware to be executed. This can enhance security of the system.

In this embodiment, an OTA upgrade process on the MCU chip 200 may include the step as follows.

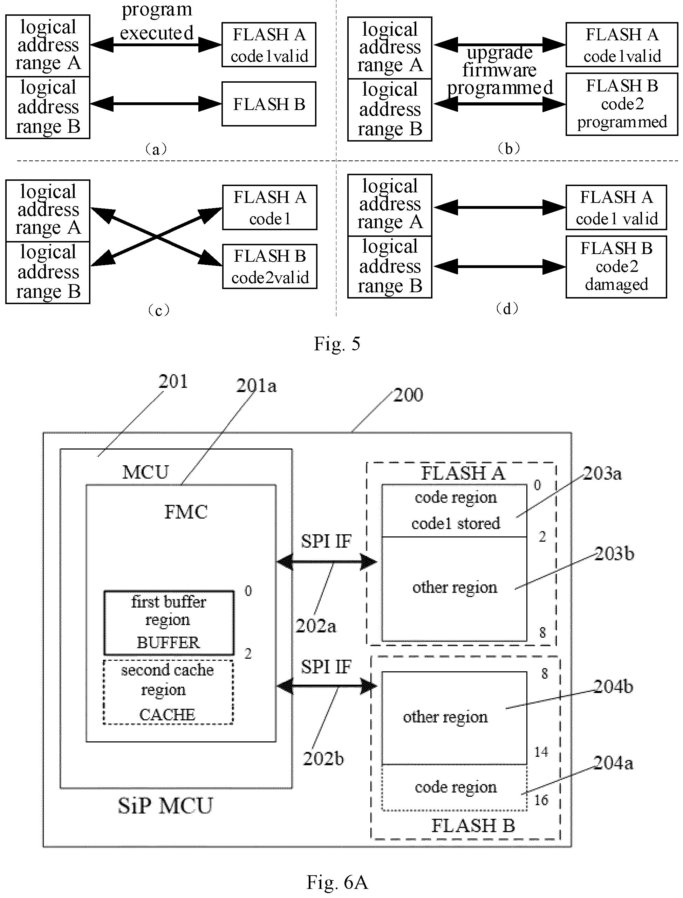

Initially, referring to Detail (a) of Fig. 5, the physical addresses of the first flash memory die FLASH A correspond to the logical bus address range A, and the physical addresses of the second flash memory die FLASH B to the logical bus address range B. The logical bus address range A is a lower address range, and the start address of the logical bus address range B immediately succeeds the end address of the logical bus address range A. In the default state, the MCU die 201 will read instructions from the logical bus address range A, starting from the start address (e.g., "0"), to execute the older version of the firmware stored in the first flash memory die FLASH A ("code1 valid"). At this time, the OTA upgrade version of the firmware has not been written into the second flash memory die FLASH B yet ("code2 absent").

Next, referring to Detail (b) of Fig. 5, the MCU die 201 writes and stores the OTA upgrade version of the firmware ("code2") distributed from an OTA upgrade server (or OTA upgrade service provider) into corresponding physical address spaces in the second flash memory die FLASH B according to the mapping for the logical bus address range B, achieving the programming of the second flash memory die FLASH B. In this process, the programming of the OTA upgrade version of the firmware ("code2") into the second flash memory die FLASH B can completely run in the background and does not have any impact on the older version of the firmware executed in the first flash memory die FLASH A ("code 1 valid").

Subsequently, after the system is powered on again or reset, the MCU chip 200 subjects the OTA upgrade version of the firmware ("code2") that has been written into the second flash memory die FLASH B to a check (or self-check). If the check passes, then as shown in Detail (c) of Fig. 5, the swap flag bit is set valid, indicating that the OTA upgrade version of the firmware stored in the second flash memory die FLASH B is valid ("code2 valid"). As a result, the logical address mappings for the second and first flash memory dies FLASH B, FLASH A are swapped. That is, the logical bus address range A in the MCU die 201 is mapped to the physical addresses of the second flash memory die FLASH B, and the logical bus address range B in the MCU die 201 to the physical addresses of the first flash memory die FLASH A. Therefore, the OTA upgrade version of the firmware is executed. If the check fails after the system is powered on again or reset, due to the programming of the OTA upgrade version of the firmware into the second flash memory die FLASH B being interrupted, damage occurring in this process, the OTA upgrade service provider itself having found that the OTA upgrade version of the firmware is problematic, or other reasons, then as shown in Detail (d) of Fig. 5, the swap flag bit of the FMC module in the MCU die 201 is set invalid, indicating that the OTA upgrade version of the firmware stored in the second flash memory die FLASH B is invalid or damaged ("code2 damaged"). In response to this failure, the firmware is rolled back to the older version stored in the first flash memory die FLASH A ("code 1 valid"). Thus, the firmware in the first flash memory die FLASH A is restored and executed. In this way, security of the system is enhanced.

In summary, compared with conventional SiP MCU chips, the MCU chip of this embodiment is composed of the MCU die and the first and second flash memory dies FLASH A, FLASH B that are stacked and packaged with the MCU die. In order to update firmware by means of an OTA upgrade, an OTA upgrade version of the firmware may be programmed into the second flash memory die FLASH B, and an older version of the firmware may be stored in the first flash memory die FLASH A. In this way, programming the OTA upgrade version of the firmware into the second flash memory die FLASH B does not affect any operation on the first flash memory die FLASH A at all, allowing RWW operations in the MCU chip. As a result, the influence of erase and program operations in one of the second and first flash memory dies FLASH B, FLASH A on operating efficiency of the firmware in the other flash memory die is greatly reduced, resulting in increases in operating performance, operating efficiency, support to OTA upgrades and upgrading efficiency of the MCU chip. Moreover, if the OTA upgrade version of the firmware in the second flash memory die FLASH B is detected to be invalid after the system is powered on again or reset, it will execute (i.e., roll back to) the older version of the firmware in the first flash memory die FLASH A, enhancing security of the system.

### EMBODIMENT 2

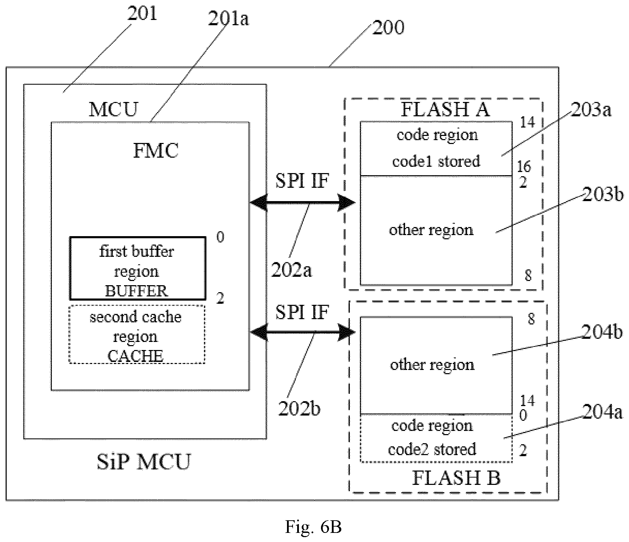

Referring to Figs. 6A and 6B, in a second embodiment of the present invention, there is provided a microcontroller unit (MCU) chip 200 including an MCU die 201, a first flash memory die FLASH A and a second flash memory die FLASH B, which are packaged in a single package (i.e., the MCU chip 200 is a system-in-package (SiP) MCU chip). In other words, the MCU chip 200 is composed of the MCU die 201 and the two flash memory dies FLASH A, FLASH B that are stacked and packaged with the MCU die 201.

The MCU die 201 has a flash memory controller (FMC) module 201a and two bus interfaces 202a, 202b. The first flash memory die FLASH A is connected to the FMC module via the bus interface 202a, and the second flash memory die FLASH B is connected to the FMC module via the bus interface 202b. The first flash memory die FLASH A is configured for storage of an older version of firmware (i.e., older code or instructions), and the second flash memory die FLASH B is configured for storage of an OTA upgrade version of the firmware (i.e., code or instructions for enabling an OTA upgrade). Once these versions of the firmware are respectively stored in the first and second flash memory dies FLASH A, FLASH B, they are mutual backups of each other. The FMC module utilizes address mapping control to convert received bus operation requests into a temporal sequence of access to the first and second flash memory dies FLASH A, FLASH B through the bus interfaces 202a, 202b, respectively. In order to update the firmware in the MCU chip 200 through an OTA upgrade, an OTA upgrade process may be initiated to program the OTA upgrade version of the firmware into the second flash memory die FLASH B through the bus interface 202b. During this programming process, any operation performed by the FMC module on the first flash memory die FLASH A through the bus interface 202a will not be affected at all.

Differing from the MCU chip 200 of the first embodiment, the FMC module in the MCU chip 200 of this embodiment also has a first buffer region BUFFER and a second cache region CACHE. The first flash memory die FLASH A has a code region 203a configured for storage of the older version code1 of the firmware, and the other region 203b of the first flash memory die FLASH A than the code region 203a may be referred to hereinafter as a data region thereof. The second flash memory die FLASH B has a code region 204a configured for storage of the OTA upgrade version code2 of the firmware, and the other region 204b of the second flash memory die FLASH B than the code region 204a may be referred to hereinafter as a data region thereof. The first buffer region BUFFER, the code region 203a and the code region 204a may have the same storage capacity. By default, the content in the code region 203a can be 1:1 copied into the first buffer region BUFFER, and the contents in the other region 203b of the first flash memory die FLASH A and in the code 204a and other 204b regions of the second flash memory die FLASH B can be copied, as required, into the second cache region CACHE of the FMC module and then accessed, or can be directly accessed, as required, via the bus interfaces according to a temporal sequence converted by the interface control circuit from bus operation requests. In a swapped state (where the OTA upgrade version code2 of the firmware has been programmed into the code region 204a of the second flash memory die FLASH B, and the OTA upgrade version code2 of the firmware stored in the code region 204a of the second flash memory die FLASH B is detected to be valid after the system is powered on again or reset), logical bus address mappings for the code regions 203a, 204a have been swapped, while logical bus address mappings for the other regions 203b, 204b are maintained, when compared with a default state. Moreover, the content in the code region 204a can be 1:1 copied into the first buffer region BUFFER, and the contents in the other region 203b of the first flash memory die FLASH A and in the code 204a and other 204b regions of the second flash memory die FLASH B can be copied, as required, into the second cache region CACHE of the FMC module and then accessed, or can be directly accessed, as required, via the bus interfaces according to a temporal sequence converted by the interface control circuit from bus operation requests.

Optionally, the second cache region CACHE may consist of an SRAM, and when a logical address miss occurs in the second cache region CACHE, the FMC module may copy the correct content from the second or first flash memory die FLASH B, FLASH A into the second cache region CACHE.

Compared with the first embodiment, the present embodiment comprehensively takes into account tradeoffs between multiple factors of the MCU chip, including its performance, cost and flash memory capacity. Moreover, whether in the default mode, or in the swapped mode after the system is powered on again or reset, the content in the code region corresponding to a designated logical bus address range is copied into the first buffer region BUFFER. Thus, through always directly reading the content in the first buffer region BUFFER, the MCU die can always execute the firmware stored in the designated logical bus address range. In this way, an OTA upgrade can be accomplished at a read rate without delays in access to the designated logical bus address range, allowing full-rate execution of the firmware. Other contents stored at logical addresses out of the designated logical bus address range can be copied, as required, into the second cache region CACHE and then accessed, or can be directly accessed, as required, via the bus interfaces according to a temporal sequence converted by the interface control circuit from bus operation requests. Due to variable logical addresses of the data copied into the second cache region CACHE, a logical address miss may occur. When this happens, it is necessary for the FMC module to copy the corresponding content from the second or first flash memory die FLASH B, FLASH A into the second cache region CACHE before it can respond to a read request from the MCU. This may lead to read delays, making the MCU chip of this embodiment suitable for storage of contents not requiring a high read rate (e.g., data or the like) and thus expanding its scope of application. Further, copying the firmware from the code region of one of the flash memory dies into the first buffer region allows the MCU die to run the firmware in its internal first buffer region. In this way, read, write and erase operations can be performed on the first flash memory die at the same time as the OTA upgrade version of the firmware is programmed into the second flash memory die, increasing the system's operating efficiency.

This embodiment is described in greater detail below with reference to the example of Figs. 6A and 6B, in which it is assumed that the first and second flash memory dies FLASH A, FLASH B are of the same model and capacity (8 Mb) and the code regions 203a, 204a and the first buffer region BUFFER are of the same capacity (2 Mb). It is further assumed that the code region 203a of the first flash memory die FLASH A consists of the first 2 Mb of physical address space of the first flash memory die FLASH A, and the code region 204a of the second flash memory die FLASH B consists of the last 2 Mb of physical address space of the second flash memory die FLASH B. Optionally, the first buffer region BUFFER may consist of a 2Mb SRAM.

Referring to Fig. 6A, by default, after the MCU chip 200 is powered on, the code region 203a of the first flash memory die FLASH A (i.e., the first 2 Mb of space of the flash memory die FLASH A) corresponds to the logical bus address range from 0 Mb to 2 Mb in the MCU die 201, and the other region 203b of the first flash memory die FLASH A corresponds to the logical bus address range from 2 Mb to 8 Mb in the MCU die 201. Moreover, the code region 204a of the second flash memory die FLASH B (i.e., the last 2 Mb of space of the flash memory die FLASH B) corresponds to the logical bus address range from 14 Mb to 16 Mb in the MCU die 201, and the other region 204b of the second flash memory die FLASH B corresponds to the logical bus address range from 8 Mb to 14 Mb in the MCU die 201. Moreover, the content in the code region 203a can override that in the first buffer region BUFFER of the FMC module (i.e., it can be copied into the first buffer region BUFFER), and the contents in the other region 203b of the first flash memory die FLASH A and in the entire second flash memory die FLASH B can override that in the second cache region CACHE of the FMC module (i.e., they can be copied into the second cache region CACHE), as required, or can be accessed, as required, through the bus interfaces according to a temporal sequence generated by the FMC module. As a result, the MCU die 201 directly reads the first buffer region BUFFER to run the older version code1 of the firmware.

Referring to Fig. 6B, after the OTA upgrade version of the firmware (i.e., the new firmware) is burned (i.e., programmed) into the code region 204a, once the system is powered on again or reset later, the FMC module swaps only the logical bus address mappings for the code regions 203a, 204a, if a swap flag bit in the FMC module is set valid. As a result, the code region 204a instead corresponds to the logical bus address range from 0 Mb to 2 Mb and becomes accessible by the first buffer region BUFFER, and the code region 203a instead corresponds to the logical bus address range from 14 Mb to 16 Mb and becomes accessible by the second cache region CACHE or through the bus interfaces according to a temporal sequence generated by the FMC module. On the other hand, the logical bus address mappings for the other regions 203b, 204b are maintained and remain continuous. That is, the other region 203b still corresponds to the logical bus address range from 2 Mb to 8 Mb in the MCU die 201, and the other region 204b still corresponds to the logical bus address range from 8 Mb to 14 Mb in the MCU die 201. The contents in the entire first flash memory die FLASH A and the other region 204b of the second flash memory die FLASH B can override that in the second cache region CACHE of the FMC module (i.e., they can be copied into the second cache region CACHE), as required, or can be accessed, as required, through the bus interfaces according to a temporal sequence generated by the FMC module. As a result, the MCU die 201 directly reads the first buffer region BUFFER to run the OTA upgrade version code2 of the firmware. Obviously, access to data in the other region 203b, 204b is not affected by whether it is in the swapped mode or not.

Optionally, in the MCU chip 200 of this embodiment, the FMC module may also have a code error flag bit, which is set to disable execution of the firmware when the MCU die 201 determines that the firmware versions stored in the first and second flash memory dies FLASH A, FLASH B are both invalid, thereby preventing the MCU chip from falling into an infinite loop.

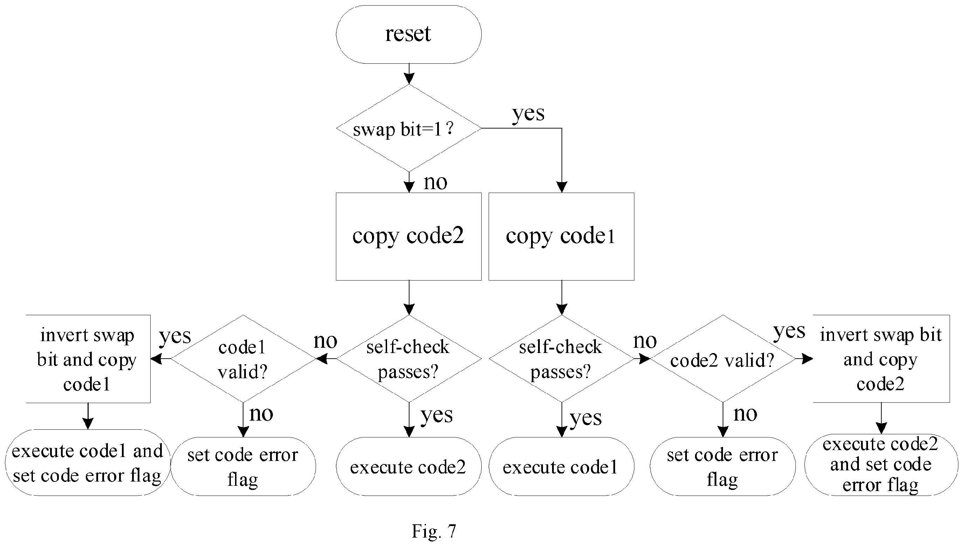

An OTA upgrade process performed on the MCU chip 200 of this embodiment is described below with combined reference to Figs. 6A, 6B and 7.

At first, after a new PoR or system reset, the FMC module checks whether the swap flag bit is set valid (i.e., when the swap flag bit= 1, it is set invalid) to determine whether to execute the older or OTA upgrade version of the firmware first.

If the swap flag bit is found in the check to be set valid, then the OTA upgrade version code2 of the firmware is copied from the code region 204a into the first buffer region BUFFER, and a self-check is carried out on the copied firmware code2. If the self-check passes, the swap flag bit is still set valid to indicate that the OTA upgrade version code2 of the firmware stored in the code region 204a of the second flash memory die FLASH B is valid, and the FMC module then directly accesses and executes code2 copied into the first buffer region BUFFER. Thus, after the new PoR or system reset, the OTA upgrade version of the firmware is executed first. If the self-check fails, it is necessary to further check whether the older version code1 of the firmware in the code region 203a is valid. To this end, the swap flag bit is instead set invalid to indicate that the OTA upgrade version code2 of the firmware stored in the code region 204a of the second flash memory die FLASH B is invalid, and the older version code1 of the firmware is copied from the code region 203a into the first buffer region BUFFER, followed by a self-check on the copied firmware code1. If the self-check passes, it is indicated that the older version code1 of the firmware in the code region 203a is valid. Accordingly, the FMC module directly accesses and executes the firmware code1 copied into the first buffer region BUFFER, and the code error flag bit is set invalid (e.g., "0"). In this way, when the OTA upgrade version of the firmware in the second flash memory die is invalid, the system can roll back to the older version of the firmware in the first flash memory die. If the self-check on the copied firmware code1 fails, it is indicated that the older version code1 of the firmware in the code region 203a is not valid. In this case, the code error flag bit is directly set valid (e.g., "1") to disable execution and upgrading of the firmware, thereby preventing the system from falling into an infinite loop.

In the aforementioned check, if the swap flag bit is found to be set invalid, then the older version code1 of the firmware is copied from the code region 203a into the first buffer region BUFFER, and a self-check is carried out on the copied older version code1 of the firmware. If the self-check passes, the FMC module directly accesses and executes code1 that has been copied into the first buffer region BUFFER. Thus, after the aforementioned new PoR or system reset, the older version of the firmware is executed first. If the self-check fails, it can be further checked whether the OTA upgrade version code2 of the firmware in the code region 204a is valid. To this end, the OTA upgrade version code2 of the firmware is copied from the code region 204a into the first buffer region BUFFER, and a self-check is carried out on the copied firmware code2. If the self-check passes, then the swap flag bit is instead set valid to indicate that the OTA upgrade version code2 of the firmware in the code region 204a is valid. Accordingly, the FMC module directly accesses and executes the OTA upgrade version code2 of the firmware that has been copied into the first buffer region BUFFER and sets the code error flag bit invalid (e.g., "0"). If the self-check on the copied firmware code2 fails, the swap flag bit is still set invalid to indicate that the OTA upgrade version code2 of the firmware in the code region 204a is not valid. In this case, the code error flag bit is directly set valid (e.g., "1") to disable execution and upgrading of the firmware.

### EMBODIMENT 3

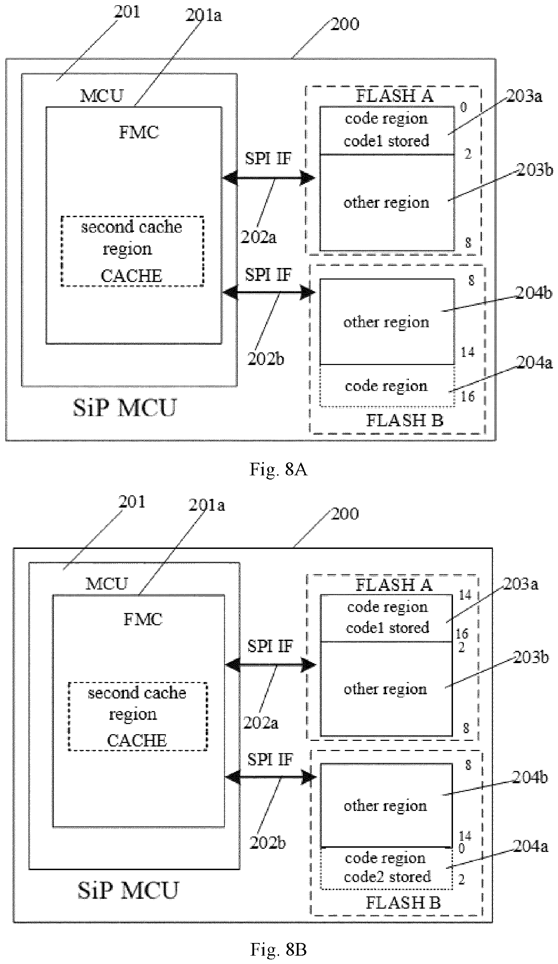

Referring to Figs. 8A and 8B, in a third embodiment of the present invention, there is provided a microcontroller unit (MCU) chip 200 including an MCU die 201, a first flash memory die FLASH A and a second flash memory die FLASH B, which are packaged in a single package (i.e., the MCU chip 200 is a system-in-package (SiP) MCU chip). In other words, the MCU chip 200 is composed of the MCU die 201 and the two flash memory dies FLASH A, FLASH B that are stacked and packaged with the MCU die 201.

The MCU die 201 has a flash memory controller (FMC) module 201a and two bus interfaces 202a, 202b. The first flash memory die FLASH A is connected to the FMC module via the bus interface 202a, and the second flash memory die FLASH B is connected to the FMC module via the bus interface 202b. The first flash memory die FLASH A is configured for storage of an older version of firmware (i.e., older code or instructions), and the second flash memory die FLASH B is configured for storage of an OTA upgrade version of the firmware (i.e., code or instructions for enabling an OTA upgrade). Once these versions of the firmware are respectively stored in the first and second flash memory dies FLASH A, FLASH B, they are mutual backups of each other. The FMC module utilizes address mapping control to convert received bus operation requests into a temporal sequence of access to the first and second flash memory dies FLASH A, FLASH B through the bus interfaces 202a, 202b, respectively. In order to update the firmware in the MCU chip 200 through an OTA upgrade, an OTA upgrade process may be initiated to program the OTA upgrade version of the firmware into the second flash memory die FLASH B through the bus interface 202b. During this programming process, any operation performed by the FMC module on the first flash memory die FLASH A through the bus interface 202a will not be affected at all.

Differing from the MCU chip 200 of the second embodiment, the first buffer region BUFFER, into which the content in the first or second flash memory die FLASH A, FLASH B is 1:1 copied, is omitted from the FMC module in the MCU die 201 in the MCU chip 200 of this embodiment. The contents in the entire first and second flash memory dies FLASH A, FLASH B can be copied, as required, into a second cache region CACHE in the FMC module and then accessed, or can be accessed via the bus interfaces according to a temporal sequence converted from bus operation requests by the FMC module. The MCU chip 200 of this embodiment is reduced in both area and cost.

Likewise, for example, it is assumed that the first and second flash memory dies FLASH A, FLASH Bare of the same model and capacity (8 Mb) and code regions 203a, 204a respectively of the first and second flash memory dies FLASH A, FLASH B are also of the same capacity (2 Mb). It is further assumed that the code region 203a of the first flash memory die FLASH A consists of the first 2 Mb of physical address space of the first flash memory die FLASH A, and the code region 204a of the second flash memory die FLASH B consists of the last 2 Mb of physical address space of the second flash memory die FLASH B. The firmware is executed in the MCU chip 200 of this embodiment in the manner described below.

Referring to Fig. 8A, by default, after the MCU chip 200 of this embodiment is powered on, the code region 203a of the first flash memory die FLASH A (i.e., the first 2 Mb of space of the flash memory die FLASH A) corresponds to the logical bus address range from 0 Mb to 2 Mb in the MCU die 201, the other region 203b of the first flash memory die FLASH A than the code region 203a corresponds to the logical bus address range from 2 Mb to 8 Mb in the MCU die 201. Moreover, the code region 204a of the second flash memory die FLASH B (i.e., the last 2 Mb of space of the flash memory die FLASH B) corresponds to the logical bus address range from 14 Mb to 16 Mb in the MCU die 201, and the other region 204b of the second flash memory die FLASH B than the code region 204a corresponds to the logical bus address range from 8 Mb to 14 Mb in the MCU die 201. With this arrangement, the content in the code region 203a can be copied, as required, into the second cache region CACHE in the FMC module, and the MCU die 201 can directly read the content in the second cache region CACHE to run the older version code1 of the firmware.

Referring to Fig. 8B, after the OTA upgrade version of the firmware (i.e., the new firmware) is burned (i.e., programmed) into the code region 204a, once the system is powered on again or reset later, if the swap flag bit in the FMC module is set valid, the FMC module swaps only logical bus address mappings for the code regions 203a, 204a. As a result, the code region 204a instead corresponds to the logical bus address range from 0 Mb to 2 Mb and the code region 203a to the logical bus address range from 14 Mb to 16 Mb, while the other region 203b still corresponds to the logical bus address range from 2 Mb to 8 Mb in the MCU die 201 and the other region 204b to the logical bus address range from 8 Mb to 14 Mb in the MCU die 201. Accordingly, the content in the code region 204a can be directly copied, as required, into the second cache region CACHE in the FMC module, and the MCU die 201 can directly read the content in the second cache region CACHE to run the OTA upgrade version code2 of the firmware.

### EMBODIMENT 4

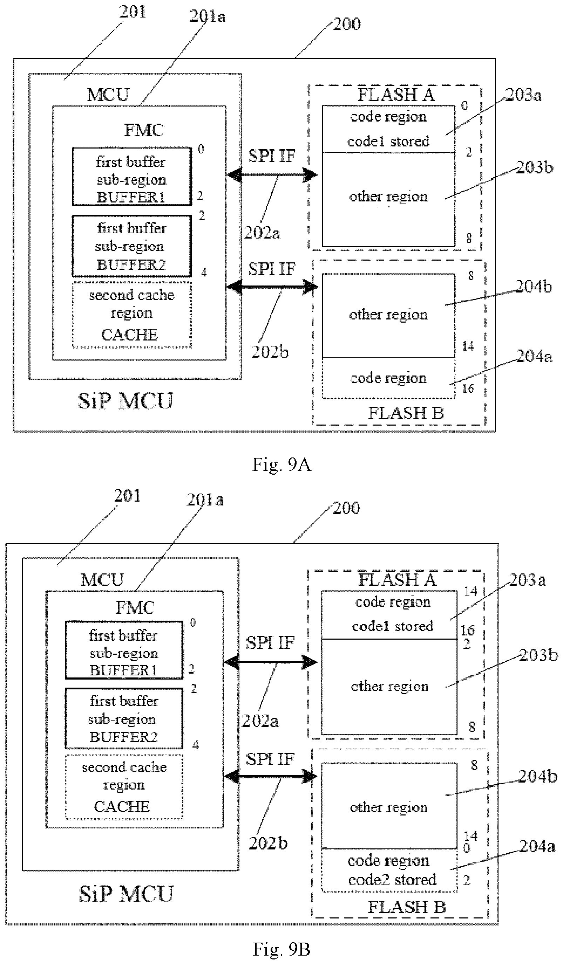

Referring to Figs. 9A and 9B, in a fourth embodiment of the present invention, there is provided a microcontroller unit (MCU) chip 200 including an MCU die 201, a first flash memory die FLASH A and a second flash memory die FLASH B, which are packaged in a single package (i.e., the MCU chip 200 is a system-in-package (SiP) MCU chip). In other words, the MCU chip 200 is composed of the MCU die 201 and the two flash memory dies FLASH A, FLASH B that are stacked and packaged with the MCU die 201.

The MCU die 201 has a flash memory controller (FMC) module 201a and two bus interfaces 202a, 202b. The first flash memory die FLASH A is connected to the FMC module via the bus interface 202a, and the second flash memory die FLASH B is connected to the FMC module via the bus interface 202b. The first flash memory die FLASH A is configured for storage of an older version of firmware (i.e., older code or instructions), and the second flash memory die FLASH B is configured for storage of an OTA upgrade version of the firmware (i.e., code or instructions for enabling an OTA upgrade). Once these versions of the firmware are respectively stored in the first and second flash memory dies FLASH A, FLASH B, they are mutual backups of each other. The FMC module utilizes address mapping control to convert received bus operation requests into a temporal sequence of access to the first and second flash memory dies FLASH A, FLASH B through the bus interfaces 202a, 202b, respectively. In order to update the firmware in the MCU chip 200 through an OTA upgrade, an OTA upgrade process may be initiated to program the OTA upgrade version of the firmware into the second flash memory die FLASH B through the bus interface 202b. During this programming process, any operation performed by the FMC module on the first flash memory die FLASH A through the bus interface 202a will not be affected at all. The FMC module has a first buffer region BUFFER and a second cache region CACHE.

Differing from the MCU chip 200 of the second embodiment, in the MCU chip 200 of this embodiment, the total capacity M1 of the first buffer region BUFFER in the FMC module is greater than both the capacity M2 of a code region 203a in the first flash memory die FLASH A and the capacity M2 of a code region 204a in the second flash memory die FLASH B. In a default mode, the contents in the code region 203a of the first flash memory die FLASH A and in a designated logical address range (M1-M2) in the other region 203b of the first flash memory die FLASH A than the code region 203a can be together copied into the first buffer region BUFFER, and the content in the remainder of the other region 203b of the first flash memory die FLASH A and the contents in the code region 204a of the second flash memory die FLASH B and in the other region 204b of the second flash memory die FLASH B than the code region 204a can be copied, as required, into the second cache region CACHE of the FMC module and then accessed, or can be directly accessed, as required, via the bus interfaces according to a temporal sequence converted by the FMC module from bus operation requests. In a swapped state (where the OTA upgrade version code2 of the firmware has been programmed into the code region 204a of the second flash memory die FLASH B, and the OTA upgrade version code2 of the firmware stored in the code region 204a of the second flash memory die FLASH B is detected to be valid after the system is powered on again or reset), the FMC module swaps only logical bus address mappings for the code regions 203a, 204a, compared with those in the default state, while logical bus address mappings for the other regions 203b, 204b are maintained. As a result, the contents in the code region 204a and in the designated logical address range (M1-M2) in the other region 203b can be together copied into the first buffer region BUFFER, while the contents in the code region 203a of the first flash memory die FLASH A, in the remainder of the other region 203b and in the other region 204b of the second flash memory die FLASH B can be copied, as required, into the second cache region CACHE of the FMC module and then accessed, or can be directly accessed via the bus interfaces according to a temporal sequence converted by the FMC module from bus operation requests.

Optionally, the second cache region CACHE may consist of an SRAM, and when a logical address miss occurs in the second cache region CACHE, the FMC module may copy the correct content from the second or first flash memory die FLASH B, FLASH A into the second cache region CACHE.

Compared with the second embodiment, in addition to all the advantages that the second embodiment provides, this embodiment can expand the total capacity of the first buffer region so that the content in the designated logical address range in the other region 203b of in the first flash memory die (which, for example, immediately succeeds the end address of the code region 203a or 204a) together with the firmware into the first buffer region. In this way, operating efficiency of the MCU chip can be enhanced as much as is allowed by its chip area.

This embodiment is described in greater detail below with reference to the example of Figs. 9A and 9B, in which it is assumed that the first and second flash memory dies FLASH A, FLASH B are of the same model and capacity (8 Mb) and the capacities of the code regions 203a, 204a are both 2 Mb. It is also assumed that the first buffer region BUFFER consists of two first buffer sub-regions BUFFER1, BUFFER2 both with capacities of 2 Mb, so its total capacity is 4 Mb. It is further assumed that the code region 203a of the first flash memory die FLASH A consists of the first 2 Mb of physical address space of the first flash memory die FLASH A, and the code region 204a of the second flash memory die FLASH B consists of the last 2 Mb of physical address space of the second flash memory die FLASH B.

Referring to Fig. 9A, by default, after the MCU chip 200 is powered on, the code region 203a of the first flash memory die FLASH A (i.e., the first 2 Mb of space of the flash memory die FLASH A) corresponds to the logical bus address range from 0 Mb to 2 Mb in the MCU die 201, and the other region 203b of the first flash memory die FLASH A corresponds to the logical bus address range from 2 Mb to 8 Mb in the MCU die 201. Moreover, the code region 204a of the second flash memory die FLASH B (i.e., the last 2 Mb of space of the flash memory die FLASH B) corresponds to the logical bus address range from 14 Mb to 16 Mb in the MCU die 201, and the other region 204b of the second flash memory die FLASH B corresponds to the logical bus address range from 8 Mb to 14 Mb in the MCU die 201. The content in the code region 203a can override that in the first buffer sub-region BUFFER1 of the FMC module (i.e., it can be copied into the first buffer sub-region BUFFER1), and 2 Mb of content in the designated logical address range in the other region 203b (e.g., the logical address range is the 2Mb range from 2 Mb to 4 Mb in the other region 203b, which immediately succeeds the end logical address of the code region 203a) can override that in the first buffer sub-region BUFFER2 (i.e., it can be copied into the first buffer sub-region BUFFER2). The contents in the remaining 4 Mb (from 4 Mb to 8 Mb) of the other region 203b of the first flash memory die FLASH A and in the entire second flash memory die FLASH B (from 8 Mb to 16 Mb) may override, as required, the second cache region CACHE of the FMC module (i.e., they can be copied, as required, into the second cache region CACHE), or can be accessed, as required, through the bus interfaces according to a temporal sequence generated by the FMC module. As a result, the MCU die 201 can directly read the first buffer sub-region BUFFER 1 to run the older version code1 of the firmware, and can directly access the content in the first buffer sub-region BUFFER2 to retrieve relevant data therefrom.

Referring to Fig. 9B, after the OTA upgrade version of the firmware (i.e., the new firmware) is burned (i.e., programmed) into the code region 204a, once the system is powered on again or reset later, if the swap flag bit in the FMC module is set valid, the FMC module swaps only logical bus address mappings for the code regions 203a, 204a. As such, the code region 204a instead corresponds to the logical bus address range from 0 Mb to 2 Mb and can access the first buffer sub-region BUFFER1, and the code region 203a instead corresponds to the logical bus address range from 14 Mb to 16 Mb and can access the second cache region CACHE, or via the bus interfaces according to a temporal sequence generated by the FMC module. At the same time, logical bus address mappings for the other regions 203b, 204b are maintained and remain continuous. That is, the other region 203b still corresponds to the logical bus address range from 2 Mb to 8 Mb in the MCU die 201, and the other region 204b still corresponds to the logical bus address range from 8 Mb to 14 Mb. As such, the content in the other region 203b, which was previously accessible from the first buffer sub-region BUFFER2, i.e., in the logical bus address range from 2 Mb to 4 Mb, remains accessible from the first buffer sub-region BUFFER2, and the contents in the entire code region 203a and the remainder of the other region 203b of the first flash memory die FLASH A and in the other region 204b of the second flash memory die FLASH B can override, as required, the second cache region CACHE of the FMC module (i.e., they can be copied, as required, into the second cache region CACHE), or can be accessed, as required, through the bus interfaces according to a temporal sequence generated by the FMC module. As a result, the MCU die 201 can directly read the first buffer sub-region BUFFER1 to run the OTA upgrade version code2 of the firmware. Apparently, access to the data in the other regions 203b, 204b is not affected by whether it is in the swapped mode.

Obviously, in this embodiment, the logical bus address range 0 Mb to 4 Mb operates with the highest efficiency.

### EMBODIMENT 5

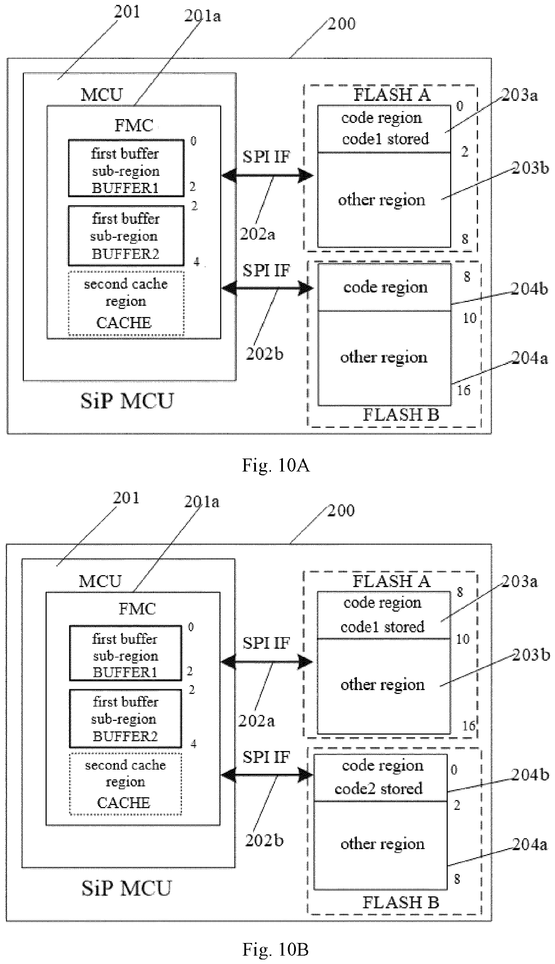

Referring to Figs. 10A and 10B, in a fifth embodiment of the present invention, there is provided a microcontroller unit (MCU) chip 200 including an MCU die 201, a first flash memory die FLASH A and a second flash memory die FLASH B, which are packaged in a single package (i.e., the MCU chip 200 is a system-in-package (SiP) MCU chip). In other words, the MCU chip 200 is composed of the MCU die 201 and the two flash memory dies FLASH A, FLASH B that are stacked and packaged with the MCU die 201.

The MCU die 201 has a flash memory controller (FMC) module 201a and two bus interfaces 202a, 202b. The first flash memory die FLASH A is connected to the FMC module via the bus interface 202a, and the second flash memory die FLASH B is connected to the FMC module via the bus interface 202b. The first flash memory die FLASH A is configured for storage of an older version of firmware (i.e., older code or instructions), and the second flash memory die FLASH B is configured for storage of an OTA upgrade version of the firmware (i.e., code or instructions for enabling an OTA upgrade). Once these versions of the firmware are respectively stored in the first and second flash memory dies FLASH A, FLASH B, they are mutual backups of each other. The FMC module utilizes address mapping control to convert received bus operation requests into a temporal sequence of access to the first and second flash memory dies FLASH A, FLASH B through the bus interfaces 202a, 202b, respectively. In order to update the firmware in the MCU chip 200 through an OTA upgrade, an OTA upgrade process may be initiated to program the OTA upgrade version of the firmware into the second flash memory die FLASH B through the bus interface 202b. During this programming process, any operation performed by the FMC module on the first flash memory die FLASH A through the bus interface 202a will not be affected at all. The FMC module has a first buffer region BUFFER and a second cache region CACHE.

Differing from the MCU chip 200 of the fourth embodiment, in the MCU chip 200 of this embodiment, the total capacity M1 of the first buffer region BUFFER in the FMC module is greater than the capacity M2 of a code region 203a of the first flash memory die FLASH A and the capacity M2 of a code region 204a of the second flash memory die FLASH B. Moreover, in a swapped mode, logical address mappings for the entire first and second flash memory dies FLASH A, FLASH B are swapped, and in the first buffer region BUFFER, in addition to the firmware being updated from the older version code1 to the OTA upgrade version code2, the content in the other region 203b of the first flash memory die FLASH A than the code region 203a is updated to that in the other region 204b of the second flash memory die FLASH B than the code region 204a. According to this embodiment, through expanding the total capacity of the first buffer region, the firmware and the content in a particular logical address range can be copied into the first buffer region. In this way, operating efficiency of the MCU chip can be enhanced as much as is allowed by its chip area.

Optionally, the second cache region CACHE may consist of an SRAM, and when a logical address miss occurs in the second cache region CACHE, the FMC module may copy the correct content from the second or first flash memory die FLASH B, FLASH A into the second cache region CACHE.

This embodiment is described in greater detail below with reference to the example of Figs. 10A and 10B, in which it is assumed that the first and second flash memory dies FLASH A, FLASH B are of the same model and capacity (8 Mb) and the capacities of the code regions 203a, 204a are both 2 Mb. It is also assumed that the first buffer region BUFFER consists of two first buffer sub-regions BUFFER1, BUFFER2 both with capacities of 2 Mb, so its total capacity is 4 Mb. It is further assumed that the code region 203a of the first flash memory die FLASH A consists of the first 2 Mb of physical address space of the first flash memory die FLASH A, and the code region 204a of the second flash memory die FLASH B consists of the first 2 Mb of physical address space of the second flash memory die FLASH B. It is further assumed that the content in the code region 203a or 204a can override that in the first buffer sub-region BUFFER1 and the content in a designated logical address range (e.g., from 2 Mb to 4 Mb) can override that in the first buffer sub-region BUFFER2.

Referring to Fig. 10A, by default, after the MCU chip 200 is powered on, the code region 203a of the first flash memory die FLASH A (i.e., the first 2 Mb of space of the flash memory die FLASH A) corresponds to the logical bus address range from 0 Mb to 2 Mb in the MCU die 201, and the other region 203b of the first flash memory die FLASH A corresponds to the logical bus address range from 2 Mb to 8 Mb in the MCU die 201. Moreover, the code region 204a of the second flash memory die FLASH B (i.e., the first 2 Mb of space of the flash memory die FLASH B) corresponds to the logical bus address range from 8 Mb to 10 Mb in the MCU die 201, and the other region 204b of the second flash memory die FLASH B corresponds to the logical bus address range from 10 Mb to 16 Mb in the MCU die 201. The content in the code region 203a can override that in the first buffer sub-region BUFFER1 of the FMC module (i.e., it can be 1:1 copied into the first buffer sub-region BUFFER1), and the content in the designated logical address range (e.g. the logical address range is the 2Mb range from 2 Mb to 4 Mb in the other region 203b) can override that in the first buffer sub-region BUFFER2 of the FMC module (i.e., it can be 1:1 copied into the first buffer sub-region BUFFER2). The contents in the remaining last 4 Mb of the other region 203b of the first flash memory die FLASH A and in the entire second flash memory die FLASH B may override, as required, the second cache region CACHE of the FMC module (i.e., they can be copied, as required, into the second cache region CACHE), or can be accessed, as required, through the bus interfaces according to a temporal sequence generated by the FMC module. As a result, the MCU die 201 can directly read the first buffer sub-region BUFFER1 to run the older version code1 of the firmware, and can directly access the content in the first buffer sub-region BUFFER2 to retrieve relevant data therefrom.

Referring to Fig. 10B, after the OTA upgrade version of the firmware (i.e., the new firmware) is burned (i.e., programmed) into the code region 204a, once the system is powered on again or reset later, if the swap flag bit in the FMC module is set valid, the FMC module swaps not only logical bus address mappings for the code regions 203a, 204a but also logical bus address mappings for the other regions 203b, 204b. As such, the code region 204a instead corresponds to the logical bus address range from 0 Mb to 2 Mb and can be accessed by the first buffer sub-region BUFFER1 for content copying, and the code region 203a instead corresponds to the logical bus address range from 8 Mb to 10 Mb can be accessed, as required, by the second cache region CACHE, or via the bus interfaces according to a temporal sequence generated by the FMC module. At the same time, the other region 203b instead corresponds to the logical bus address range from 10 Mb to 16 Mb and can be accessed, as required, by the second cache region CACHE, or via the bus interfaces according to a temporal sequence generated by the FMC module. Moreover, the other region 204b instead corresponds to the logical bus address range from 2 Mb to 8 Mb. Accordingly, the content in the designated logical address range (e.g., from 2 Mb to 4 Mb) in the other region 204b becomes accessible by the first buffer sub-region BUFFER2, and the content in the rest of the other region 204b other than the designated logical address range (e.g., from 2 Mb to 4 Mb) remains accessible, as required, by the second cache region CACHE, or via the bus interfaces according to a temporal sequence generated by the FMC module. That is, the contents in the entire first flash memory die FLASH A and in the rest of the other region 204b other than the designated logical address range can override, as required, that in the second cache region CACHE of the FMC module (that is, they can be copied, as required, into the second cache region CACHE), or can be accessed, as required, via the bus interfaces according to a temporal sequence generated by the FMC module. As such, the MCU die 201 can directly read the first buffer sub-region BUFFER1 to run the OTA upgrade version code2 of the firmware, and can directly read the first buffer sub-region BUFFER2 to retrieve designated data from the second flash memory die FLASH B.

Similarly, in this embodiment, the logical bus address range 0 Mb to 4 Mb operates with the highest efficiency.

### EMBODIMENT 6

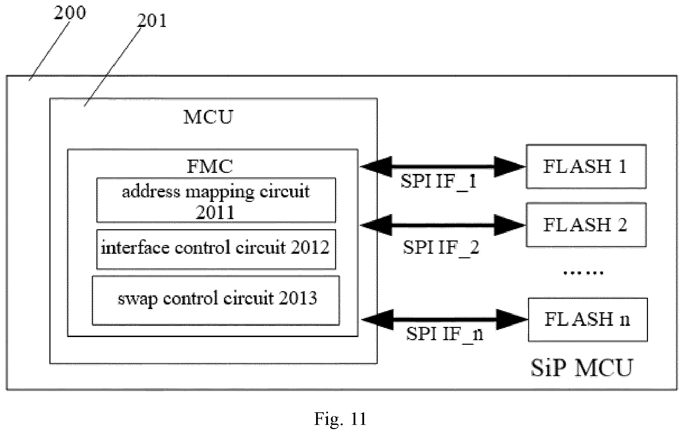

Referring to Fig. 11, in a sixth embodiment of the present invention, there is provided a microcontroller unit (MCU) chip 200 including an MCU die 201 and n flash memory dies FLASH 1 to FLASH n, which are packaged in a single package (i.e., the MCU chip 200 is a system-in-package (SiP) MCU chip). In other words, the MCU chip 200 is composed of the MCU die 201 and the n flash memory dies that are stacked and packaged with the MCU die 201. The MCU die 201 has a flash memory controller (FMC) module and n bus interfaces SPI IF_1 to SPI IF_n. The flash memory die FLASH 1 is connected to the FMC module via the bus interface SPI IF_1, the flash memory die FLASH 1 via the bus interface SPI IF_2, ..., and the flash memory die FLASH n via the bus interface SPI IF_n.

The FMC module includes an address mapping ("addr mapping") circuit 2011, an interface control ("if ctrl") circuit 2012, a swap control ("swap ctrl") circuit 2013 and other hardware logic circuits, which are similar to those in the first embodiment and, therefore, need not be described in further detail herein.

As an example, a designated i-th one (flash memory die FLASH i) of the n flash memory dies FLASH 1 to FLASH n is taken as a second flash memory die configured for storage of an OTA upgrade version of the firmware, and the remaining (n-1) flash memory dies FLASH 1 to FLASH i-1 and FLASH i+1 to FLASH n are taken as (n-1) first flash memory dies configured for storage of respective older versions of the firmware. The versions of the firmware stored in any two of the flash memory dies are different from each other. The FMC module is also configured to identify, according to a roll-back instruction generated in response to failure of an OTA upgrade (which instructs rolling back to a designated one of the older versions of the firmware), the one of the first flash memory dies FLASH 1 to FLASH i-1, FLASH i+1 to FLASH n, in which the designated older version of the firmware is stored (referred hereinafter as the "designated first flash memory die") and execute the designated older version of the firmware stored in the designated first flash memory die. Therefore, through providing different roll-back instructions, switching between multiple versions of the firmware can be achieved, such as an initial version from the factory, previous stable version(s) and designated version(s). This enables personalized OTA upgrade strategies, simultaneous read, write and erase operations in the n flash memory dies and other functions, enhancing operating efficiency of the system.

As another example, a designated i-th one (flash memory die FLASH i) of the n flash memory dies FLASH 1 to FLASH n is taken as a second flash memory die configured for storage of an OTA upgrade version of the firmware. Of the other (n-1) flash memory dies FLASH 1 to FLASH i-1 and FLASH i+1 to FLASH n, one or more are taken as flash memory dies configured for storage of respective older version(s) of the firmware, and the other flash memory die(s) is/are configured for storage of data. In case of more than one flash memory dies being configured for storage of respective older versions of the firmware, the versions of the firmware stored in any two of the flash memory dies are different from each other. The FMC module may identify, according to a roll-back instruction generated in response to failure of an OTA upgrade, the one of the first flash memory die(s) storing the respective older version(s) of the firmware, in which a designated older version of the firmware is stored (referred hereinafter as the "designated first flash memory die") and execute (roll back to) the designated older version of the firmware. The FMC module may also identify, according to a data read instruction, the one of the flash memory die(s) storing data, in which designated data is stored or a designated logical address range is contained, (referred hereinafter as the "designated data flash memory die") to read the date from the designated data flash memory die, or from the designated logical address range. Likewise, in this case, through providing different roll-back instructions, switching between multiple versions of the firmware can be achieved, such as an initial version from the factory, previous stable version(s) and designated version(s). This enables personalized OTA upgrade strategies, simultaneous read, write and erase operations in the n flash memory dies and other functions, enhancing operating efficiency of the system. Further, programs to be run and data to be accessed can be separately stored, additionally enhancing the system's operating efficiency.

The description presented above is merely that of a few preferred embodiments of the present invention and is not intended to limit the scope thereof in any sense. Any and all changes and modifications made by those of ordinary skill in the art based on the above teachings fall within the scope of the invention.

## Claims

1. A microprocessor unit (MCU) chip (200), comprising, packaged in a single package,
an MCU die (201) with at least two bus interfaces (202a, 202b), and
at least two flash memory dies, each flash memory die connected to a corresponding one of the bus interfaces (202a, 202b), and the at least two flash memory dies configured for storage of firmware,
wherein the MCU die (201) is configured to utilize address mapping control to convert received bus operation requests into a temporal sequence for the bus interfaces (202a, 202b), thereby accessing each of the flash memory dies, and to program an over-the-air (OTA) upgrade version of the firmware into a second flash memory die of the flash memory dies, wherein during the course of the programming, if the OTA upgrade version of the firmware in the second flash memory die is detected to be invalid after a power-on reset or system reset, then an older version of the firmware stored in a first flash memory die of the flash memory dies is executed, or if the OTA upgrade version of the firmware in the second flash memory die is detected to be valid after the power-on reset or system reset, then the OTA upgrade version of the firmware is executed.

2. The MCU chip (200) of claim 1, wherein the flash memory dies comprise a plurality of first flash memory dies, older versions of the firmware stored in each of the first flash memory chips are different, wherein the MCU die (201) is also configured to execute, according to a roll-back instruction generated in response to failure of an OTA upgrade, the older version of the firmware stored in the respective one of the first flash memory dies.

3. The MCU chip (200) of claim 1, wherein the second and first flash memory dies are configured for storage of the respective versions of the firmware, and the other one(s) of the flash memory dies is/are configured for storage of data.

4. The MCU chip (200) of any one of claims 1 to 3, wherein the MCU die (201) has a flash memory control (FMC) module, the FMC module comprising:
an address mapping circuit (2011) for mapping different logical bus addresses in the MCU die (201) to respective different physical addresses in the flash memory dies, thereby forming logical address mappings;
an interface control circuit (2012) for converting the received bus operation requests into the temporal sequence for the bus interfaces (202a, 202b);
a swap control circuit (2013) for controlling, when the OTA upgrade version of the firmware in the second flash memory die is valid, the address mapping circuit (2011) to swap at least logical address mappings for firmware storage spaces of the second and first flash memory dies.

5. The MCU chip (200) of claim 4, wherein the swap control circuit (2013) comprises a swap flag bit, wherein after the OTA upgrade version of the firmware is programmed and stored in the second flash memory die, the FMC module is also configured to perform a self-check on the OTA upgrade version of the firmware stored in the second flash memory die after the power-on reset or system reset, if the self-check passes, it is indicated that the OTA upgrade version of the firmware is valid by setting the swap flag bit valid, thereby causing the swap control circuit (2013) to control the address mapping circuit (2011) to swap the logical address mappings for the second and first flash memory dies, or if the self-check fails, it is indicated that the stored OTA upgrade version of the firmware is invalid by setting the swap flag bit invalid, thereby causing the address mapping circuit (2011) to maintain the logical address mappings.

6. The MCU chip (200) of claim 4, wherein the second and first flash memory dies comprise respective code regions configured for storage of the respective versions of the firmware, wherein if the OTA upgrade version of the firmware in the second flash memory die is detected to be valid after the power-on reset or system reset, the swap control circuit (2013) swaps only logical address mappings for the code regions of the first and second flash memory dies.

7. The MCU chip (200) of claim 4, wherein the second and first flash memory dies comprise respective code regions configured for storage of the respective versions of the firmware, wherein if the OTA upgrade version of the firmware in the second flash memory die is detected to be valid after the power-on reset or system reset, the swap control circuit (2013) swaps logical address mappings for the entire first and second flash memory dies.

8. The MCU chip (200) of claim 7, wherein the FMC module further comprises a first buffer region with capacity that is equal to capacity of each of the code regions, wherein if the OTA upgrade version of the firmware in the second flash memory die is detected to be invalid after the power-on reset or system reset, a content in the code region (203a, 203b) of the first flash memory die is copied into the first buffer region, or if the OTA upgrade version of the firmware in the second flash memory die is detected to be valid after the power-on reset or system reset, a content in the code region (204a, 204b) of the second flash memory die is copied into the first buffer region.

9. The MCU chip (200) of claim 7, wherein the FMC module further comprises a first buffer region with capacity that is greater than capacity of each of the code regions, wherein if the OTA upgrade version of the firmware in the second flash memory die is detected to be invalid after the power-on reset or system reset, a content in the code region (203a, 203b) of the first flash memory die is copied, together with a content in a designated logical address range in the second or first flash memory die, which does not overlap with a logical address range corresponding to the code region, into the first buffer region, or if the OTA upgrade version of the firmware in the second flash memory die is detected to be valid after the power-on reset or system reset, a content in the code region (204a, 204b) of the second flash memory die is copied, together with a content in the designated logical address range in the second or first flash memory die, into the first buffer region.

10. The MCU chip (200) of claim 8 or 9, wherein the FMC module further comprises a second cache region, wherein in addition to the content(s) copied into the first buffer region, the other contents stored in the second and first flash memory dies are copied, as required, into the second cache region and then accessed, or are accessed via the bus interfaces (202a, 202b) according to a temporal sequence generated by the interface control circuit (2012), and/or
wherein the second cache region consists of a static random-access memory (SRAM) and, in the event of a logical address miss occurring in the second cache region, the FMC module copies the corresponding content from the second or first flash memory die into the second cache region.

11. The MCU chip (200) any one of claims 8 to 10, wherein the first buffer region consists of a single SRAM or a combination of plurality of SRAMs.

12. The MCU chip (200) of any one of claims 8 to 11, wherein after the OTA upgrade version of the firmware is programmed and stored in the second flash memory die, the content in the code region (204a, 204b) of the second flash memory die is copied into the first buffer region after the power-on reset or system reset, and the FMC module then performs a self-check on the content copied into the first buffer region, wherein if the self-check passes, it is indicated that the OTA upgrade version of the firmware in the second flash memory die is valid, and the FMC module directly accesses the first buffer region to run the OTA upgrade version of the firmware, or if the self-check fails, it is indicated that the OTA upgrade version of the firmware in the second flash memory die is invalid, and the content in the code region (203a, 203b) of the first flash memory die is again copied into the first buffer region, followed by another self-check performed on the content copied into the first buffer region, wherein if the other self-check passes, it is indicated that the older version of the firmware in the first flash memory die is valid, and the FMC module directly accesses the first buffer region to run the older version of the firmware.

13. The MCU chip (200) of claim 7, wherein the FMC module further comprises a second cache region, wherein if the OTA upgrade version of the firmware in the second flash memory die is detected to be invalid after the power-on reset or system reset, a content in the code region (203a, 203b) of the first flash memory die is copied into the second cache region, or if the OTA upgrade version of the firmware in the second flash memory die is detected to be valid after the power-on reset or system reset, a content in the code region (204a, 204b) of the second flash memory die is copied into the second cache region;
optionally wherein in addition to the content copied into the second cache region, the other contents stored in the second and first flash memory dies are copied, as required, into the second cache region and then accessed, or are accessed via the bus interfaces (202a, 202b) according to a temporal sequence generated by the interface control circuit (2012).

14. The MCU chip (200) of claim 1, wherein the bus interfaces (202a, 202b) are SPI interfaces.

15. The MCU chip (200) of any one of claims 1 to 14, wherein the MCU die (201) further comprises a code error flag bit, which is set to disable execution of the firmware if the MCU die (201) determines that all the versions of the firmware stored in the flash memory dies are invalid.
